# FASCICULE DE BREVET EUROPEEN

(11) **EP 1 162 333 B1**
(45) Date de publication et mention de la délivrance du brevet: **07.12.2005**
(21) Numéro de dépôt: 01401467.4
(22) Date de dépôt: 07.06.2001
(51) Int. Cl.: E05B 51/02, F15B 15/19

(54) **Verrou pyrotechnique comprenant un moyen de maintien axial de sa tige**
Pyrotechnisches Schloss mit axialer Halterung seines Shaftes
Pyrotechnic lock with axial holding means for its shank

(30) Priorité: 09.06.2000 FR 0007470
(43) Date de publication de la demande: 12.12.2001
(73) Titulaire: GIAT Industries, 78000 Versailles (FR)
(72) Inventeur: Vidot, Jean-Paul, 65320 Borderez sur L'Echez (FR); Chemiere, Patrice, 65350 Laslades (FR)
(74) Mandataire: Célanie, Christian

(56) Documents cités:
- DE-A- 3 727 666
- US-A- 4 091 621
- US-A- 4 412 420

## Description

Le domaine technique de l'invention est celui des verrous pyrotechniques comprenant une tige mobile en translation par rapport à un corps, le déplacement de la tige étant provoqué par la pression des gaz engendrés par un composant pyrotechnique.

Les verrous pyrotechniques sont bien connus. Le brevet US4864910 décrit par exemple un dispositif de libération de structure mettant en oeuvre trois verrous pyrotechniques.

Chaque verrou comprend une tige qui peut être déplacée par l'action de la pression engendrée par un composant pyrotechnique générateur de gaz.

Les verrous pyrotechniques sont utilisés aujourd'hui dans les applications aérospatiales ainsi que dans l'automobile, par exemple pour libérer des systèmes de sécurité (tels les rétracteurs de colonne de direction de véhicule).

Un inconvénient des systèmes connus est que la position axiale de la tige n'est pas assurée après l'initiation du composant pyrotechnique. Il est alors possible de voir la tige revenir à sa position initiale comme suite à la diminution de la pression des gaz, retour pouvant être provoqué par exemple par le choc violent subi par le véhicule.

Le brevet DE-3727-666 décrit un verrou pyrotechnique constitué d'un piston mobile à l'intérieur d'une enveloppe sous l'action des gaz produits par la combustion d'une composition pyrotechnique. L'enveloppe est munie d'un piston et d'un élément élastique immobilisé dans l'enveloppe. Le piston agit sur l'élément élastique et provoque la déformation de l'enveloppe. C'est l'enveloppe qui produit essentiellement la force de retenue sur le piston et non pas l'élément élastique. Un inconvénient majeur de ce verrou demeure dans le fait que la charge pyrotechnique doit être prévue non seulement pour propulser le piston mais pour déformer l'enveloppe. De plus, l'élément élastique mis en oeuvre dans un tel verrou exerce un effort radial sur la surface conique de la tige, la résultante de cet effort sur la surface conique est un effort axial dans le sens opposé au déplacement de la tige. L'élément élastique exerce donc sur la tige un effort de translation inverse à celle générée par le gaz et risque d'engendrer un retour en arrière de la tige.

Un tel retour de la tige risque de nuire au bon fonctionnement du dispositif de sécurité.

Ce risque est d'autant plus présent que l'on cherche aujourd'hui (pour des raisons de sécurité et de coût) à diminuer la masse de composition pyrotechnique qui est mise en oeuvre dans les dispositifs de sécurité pyrotechniques.

La pression décroît donc très vite à l'intérieur du verrou pyrotechnique et ne suffit plus à assurer le maintien de la tige du verrou en position de fonctionnement.

C'est le but de l'invention que de proposer un verrou pyrotechnique permettant de pallier de tels inconvénients.

Ainsi le verrou pyrotechnique selon l'invention a une tige dont la position axiale avant et après fonctionnement se trouve maintenue de façon fiable.

L'invention a donc pour objet un verrou pyrotechnique comprenant une tige mobile en translation par rapport à un corps, le déplacement de la tige étant provoqué par la pression des gaz engendrés par un composant pyrotechnique, caractérisé en ce qu'il comprend au moins un moyen de maintien axial de la tige assurant le blocage continu de la tige, qui est constitué par une rondelle déformable élastiquement au cours de la translation de la tige, fixe par rapport à la tige et prenant appui sur une surface cylindrique de la tige pour s'opposer à la translation inverse de la tige.

Suivant une caractéristique de l'invention, lorsque la tige a été déplacée par la pression des gaz, la rondelle se trouve déformée et exerce un effort de frottement sur la tige assurant ainsi son immobilisation par rapport au corps.

La rondelle pourra être réalisée en acier à ressort de 0,2 à 0,8 mm d'épaisseur et présentera un diamètre interne compris entre 85 % et 97 % du diamètre de la surface cylindrique de la tige sur laquelle elle vient prendre appui.

La rondelle pourra être solidaire du corps.

Selon une variante de réalisation, la tige pourra comporter une gorge à l'intérieur de laquelle la rondelle se positionnera lorsque la tige est à l'état de repos.

La tige pourra porter une surface de pression sur laquelle s'exerceront les gaz engendrés par le composant pyrotechnique.

Suivant le mode de réalisation choisi, la tige pourra être poussée par la pression des gaz à l'extérieur du corps ou bien à l'intérieur du corps.

Dans ce dernier cas, le corps pourra comprendre une chambre annulaire entourant la tige et communiquant avec le composant pyrotechnique, la surface de pression étant formée par un épaulement porté par la tige.

L'invention sera mieux comprise à la lecture de la description qui va suivre de différentes modes de réalisation, description faite en référence aux dessins annexés et dans lesquels :
- la figure 1 est une vue en coupe d'un premier mode de réalisation d'un verrou pyrotechnique selon l'invention, verrou représenté en position de repos,
- la figure 2 représente ce même verrou en position activée,
- la figure 3 est une section partielle suivant le plan repéré en YY sur la figure 1,
- la figure 4 est une vue en coupe d'un deuxième mode de réalisation d'un verrou pyrotechnique selon l'invention, verrou représenté en position de repos,
- la figure 5 représente ce même verrou en position activée.

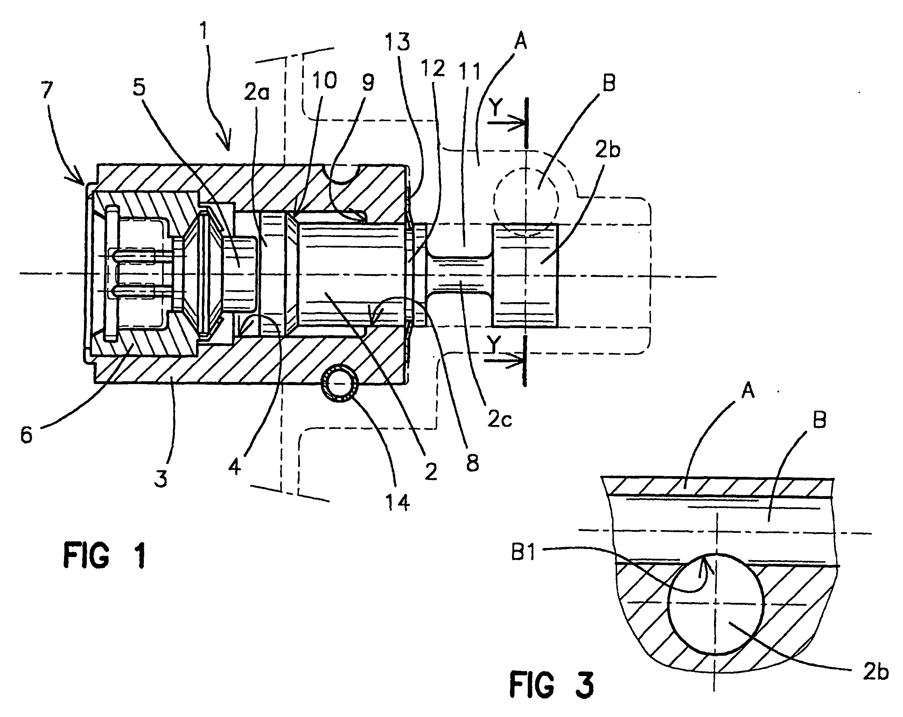

En se reportant à la figure 1, un verrou pyrotechnique 1 suivant un premier mode de réalisation de l'invention comprend une tige 2 mobile en translation par rapport à un corps 3.

Le corps 3 comporte un alésage axial 4 à l'intérieur duquel peut coulisser la tige 2. La partie arrière 2a de cette tige est élargie et a le même diamètre que l'alésage 4. Cette partie arrière 2a constitue une surface de pression sur laquelle s'exerceront les gaz engendrés par un composant pyrotechnique 5.

Le composant pyrotechnique 5 est solidaire d'un support 6 qui est fixé au corps 3 par un sertissage annulaire 7. Il est relié à un moyen de commande électronique (non représenté) par des fils de connexion (non représentés).

La tige 2 sort du corps 3 par un perçage 8 de diamètre inférieur à celui de l'alésage 4. Un lamage 9 assure le raccordement entre l'alésage 4 et le perçage 8 et joue le rôle d'une butée axiale contre laquelle s'appliquera une portée conique 10 de la tige 2.

La partie avant de la tige 2 a ici une forme qui est adaptée au verrouillage qu'elle doit assurer.

Dans le mode de réalisation décrit ici, le verrou 1 est fixé sur un organe de sécurité A d'une automobile par l'intermédiaire d'une goupille élastique 14.

Cet organe de sécurité n'est pas représenté en détails. Il comporte un doigt de verrouillage cylindrique B ayant un axe perpendiculaire à celui de la tige 2. Ce doigt B présente une empreinte cylindrique B1 qui coopère avec la surface cylindrique d'une partie avant 2b de la tige 2. Ce doigt est destiné une fois libéré à se déplacer, poussé par des moyens moteurs non représentés, pour libérer un moyen de sécurité.

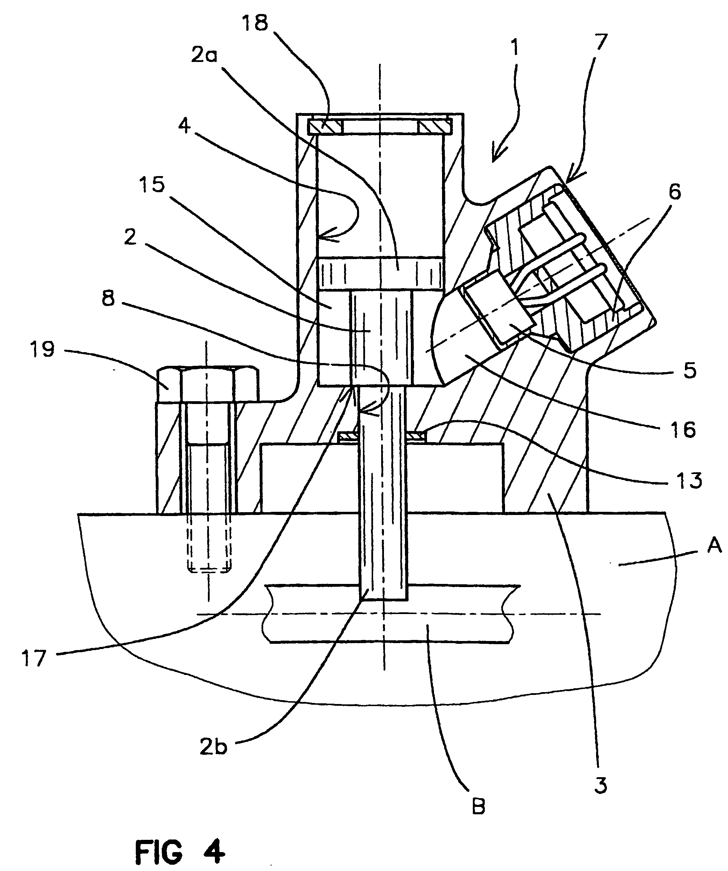

La section partielle représentée à la figure 3 précise les formes relatives du doigt B et de la tige 2.

Ainsi dans la position de repos représentée à la figure 1, le verrou assure l'immobilisation du doigt B qui assure le maintien d'un dispositif de sécurité (non représenté) tel un rétracteur de colonne de direction pour automobile.

La partie avant 2b de la tige 2 est séparée du corps de cette dernière par une partie médiane 2c de petit diamètre qui est entourée par un dégagement annulaire 11.

La tige porte enfin une gorge circulaire 12 qui reçoit une rondelle 13 qui est rendue solidaire du corps 2, par exemple par soudure. Cette rondelle fixe assure le blocage continu de la tige.

La rondelle 13 est réalisée en un matériau élastiquement déformable, par exemple en acier à ressort de 0,3 mm d'épaisseur.

En pénétrant dans la gorge 12, la rondelle assure l'immobilisation de la tige 2 dans sa position de repos.

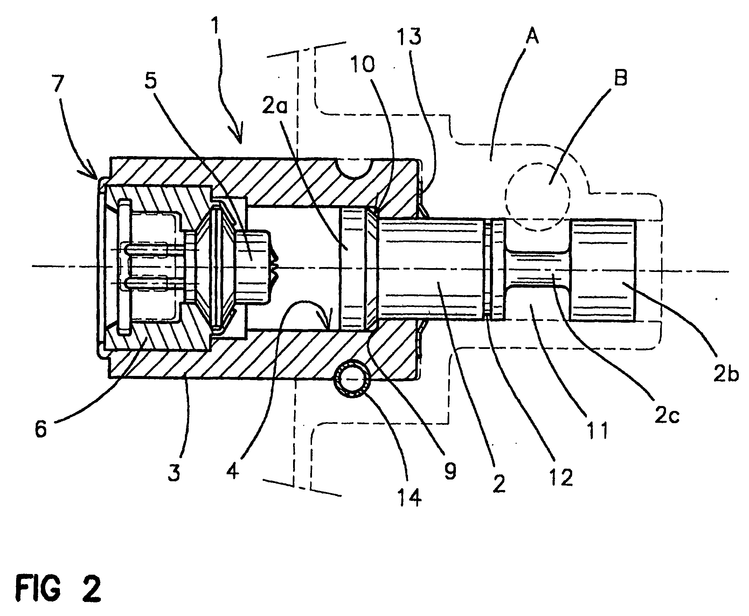

La figure 2 montre le verrou en position activée. L'initiation du composant pyrotechnique 5 a provoqué un accroissement de la pression à l'intérieur de l'alésage 4 du corps 3. La pression s'est exercée sur la surface de pression de la partie arrière 2a de la tige 2 et a poussé celle-ci jusqu'à mise en butée de la portée conique 10 sur le lamage 9.

Ce déplacement de la tige a eu pour effet de positionner le dégagement 11 au niveau du doigt de verrouillage B qui se trouve ainsi libéré.

Conformément à l'invention, la rondelle 13 a été déformée élastiquement par la tige au début de son déplacement. Elle est sortie de la gorge 12 de la tige et reste en appui constant sur une surface cylindrique de la tige 2.

Elle exerce dans cette position un effort de frottement sur la tige 2, ce qui assure ainsi l'immobilisation de cette dernière par rapport au corps 3 dans la position activée et tout le long du déplacement de la tige. Ainsi, la tige glisse dans la rondelle au cours de son déplacement mais s'oppose à un déplacement en sens inverse en pénétrant partiellement la matière de la tige. Cela se comprend aisément en considérant la figure 2 où l'on voit que la rondelle 13 présente après déplacement de la tige 2 un profil tronconique dont la petite base s'oppose au déplacement inverse de la tige. Le déplacement inverse provoquerait une réduction de la hauteur du tronc de cône engendrant une réduction du diamètre de la petite base et donc un serrage croissant de la tige. L'effort de retenue de la tige par la rondelle est donc différent suivant le sens du déplacement. On limite avantageusement la résistance offerte par la rondelle durant le déplacement normal de la tige mais on l'augmente de manière astucieuse dans le sens du retour.

Pour une rondelle réalisée en acier à ressort, on choisira une épaisseur de 0,2 à 0,8 mm et on adoptera un diamètre interne de rondelle adapté compris par exemple entre 85% et 97% du diamètre de la surface cylindrique de la tige sur laquelle elle vient prendre appui.

Une telle disposition assure un maintien axial fiable sans perturber le déplacement de la tige comme suite à l'initiation du composant pyrotechnique.

Il sera possible à titre de variante d'utiliser une rondelle en matériau différent, par exemple en matière plastique. On donnera alors à la rondelle une épaisseur supérieure et un diamètre interne inférieur.

A titre de variante, il est possible de ne pas rendre la rondelle solidaire du corps 3 mais de la pincer entre le corps 3 et l'organe de sécurité A, ou encore de la sertir dans le corps 3.

La figure 4 représente un deuxième mode de réalisation d'un verrou selon l'invention.

Ce verrou diffère du précédent essentiellement en ce que la tige 2 est poussée non pas vers l'extérieur du corps 3 mais à l'intérieur dudit corps 3 par la pression des gaz engendrés par le composant pyrotechnique 5.

Le corps comprend ainsi une chambre annulaire 15 qui entoure la tige 2 et qui communique par un canal 16 avec le composant pyrotechnique 5.

La chambre annulaire 15 est délimitée par un alésage 4 du corps 3, la tige 2 et un épaulement 2a porté par la tige. Cet épaulement 2a constitue une surface de pression sur laquelle s'exercera la pression des gaz engendrés par le composant 5.

La tige présente également un deuxième épaulement 17 qui assure son positionnement par rapport au corps 3 dans la position de repos représentée à la figure 4.

La partie avant 2b de la tige 2 a là encore une forme qui est adaptée au verrouillage qu'elle doit assurer. Cette partie avant 2b traverse le corps par le perçage 8 et vient coopérer avec un doigt B d'un organe de sécurité A.

Le doigt B est destiné une fois libéré à se déplacer, poussé par des moyens moteurs non représentés, pour libérer un moyen de sécurité.

L'alésage 4 du corps 2 est fermé par un anneau butée élastique 18 qui se loge dans une gorge réalisée dans l'alésage 4. En variante, la butée de la partie 2a peut-être assurée par un crantage local du corps 3 dans la partie débouchante du cylindre 4.

Le corps 3 du verrou 1 est fixé à l'organe de sécurité A par un moyen de fixation classique, par exemple par des vis 19. Le support 6 du composant pyrotechnique est lié au corps 3 par un sertissage 7.

Comme dans le mode de réalisation précédent, ce verrou comporte une rondelle 13 déformable élastiquement. Celle ci est disposée dans un logement cylindrique 20 aménagé au niveau du perçage 8. La rondelle 13 sera immobilisée dans son logement 20 par exemple par un crantage ou encore par sertissage.

Le diamètre du trou de la rondelle est inférieur au diamètre de la tige. Ainsi la rondelle 13 exerce un effort de frottement sur la tige 2, assurant, dans la position de repos de la figure 4, son immobilisation par rapport au corps 3.

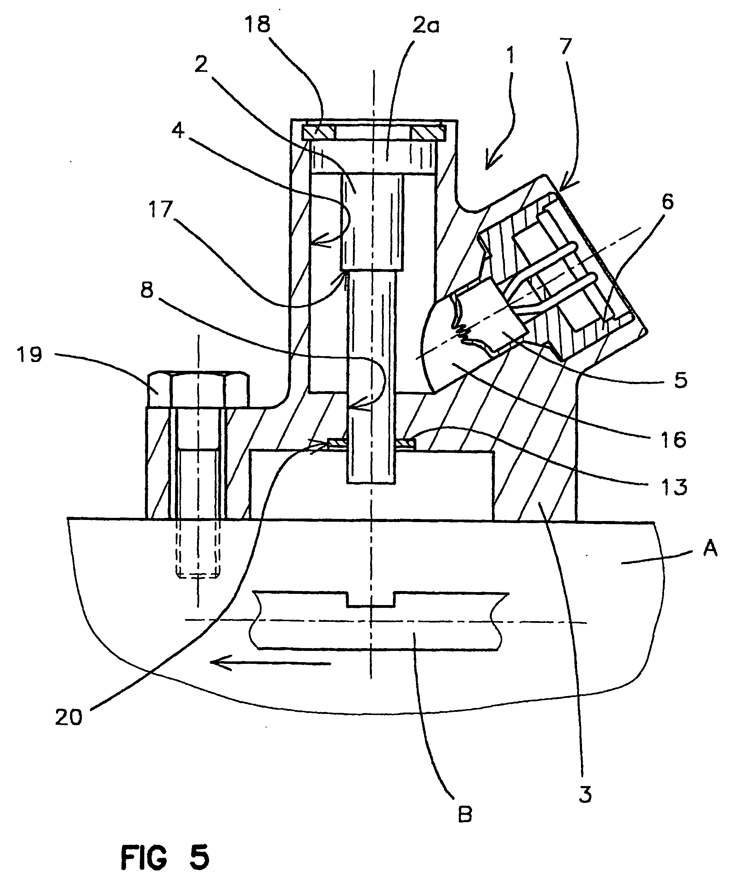

La figure 5 montre ce verrou après initiation du composant pyrotechnique 5. La pression des gaz s'est exercée dans la chambre 15 sur l'épaulement 2a et a provoqué l'entrée de la tige 2 à l'intérieur de l'alésage 4 du corps 3.

Ce mouvement de la tige 2 a permis de libérer le doigt B de l'organe de sécurité A.

La tige 2 est venue en butée contre l'anneau 18. La rondelle 13 exerce encore un effort de frottement sur la tige 2 et assure ainsi également son immobilisation par rapport au corps 3 dans la position activée.

La rondelle pourra ici être réalisée par exemple en acier à ressort comme indiqué précédemment en relation avec la figure 1.

Aucune gorge n'est prévue sur la tige pour loger la rondelle en position initiale. Les dimensions et le matériau de la rondelle sont choisis de façon à assurer une immobilisation fiable aussi bien en position de repos qu'en position activée sans pour autant perturber le déplacement de la tige sous l'effet de la pression des gaz.

A titre de variante on pourra prévoir une gorge sur la tige dans laquelle viendra se loger la rondelle dans la position activée du dispositif.

On pourra également prévoir une autre gorge pour loger la rondelle dans la position de repos (d'une façon analogue à celle représentée figure 1).

## Revendications

1. Verrou pyrotechnique (1) comprenant une tige (2) mobile en translation par rapport à un corps (3), le déplacement de la tige (2) étant provoqué par la pression des gaz engendrés par un composant pyrotechnique (5), **caractérisé en ce qu'**il comprend au moins un moyen de maintien axial de la tige (2) assurant le blocage continu de la tige, qui est constitué par une rondelle (13) déformable élastiquement au cours de la translation de la tige, fixe par rapport à la tige et prenant appui sur une surface cylindrique de la tige (2) pour s'opposer à la translation inverse de la tige.

2. Verrou pyrotechnique selon la revendication 1, **caractérisé en ce que**, lorsque la tige (2) a été déplacée par la pression des gaz, la rondelle (13) se trouve déformée et exerce un effort de frottement sur la tige (2) assurant ainsi son immobilisation par rapport au corps (3).

3. Verrou pyrotechnique selon la revendication 2, **caractérisé en ce que** la rondelle (13) est réalisée en acier à ressort de 0,2 à 0,8 mm d'épaisseur et présente un diamètre interne compris entre 85 % et 97 % du diamètre de la surface cylindrique de la tige (2) sur laquelle elle vient prendre appui.

4. Verrou pyrotechnique selon une des revendications 1 à 3, **caractérisé en ce que** la rondelle (13) est solidaire du corps (3).

5. Verrou pyrotechnique selon une des revendications 1 à 4, **caractérisé en ce que** la tige (2) comporte une gorge (12) à l'intérieur de laquelle la rondelle (13) se positionne lorsque la tige (2) est à l'état de repos.

6. Verrou pyrotechnique selon une des revendications 1 à 5, **caractérisé en ce que** la tige (2) porte une surface de pression (2a) sur laquelle s'exercent les gaz engendrés par le composant pyrotechnique (5).

7. Verrou pyrotechnique selon la revendication 6, **caractérisé en ce que** la tige (2) est poussée à l'extérieur du corps (3) par la pression des gaz.

8. Verrou pyrotechnique selon la revendication 6, **caractérisé en ce que** la tige (2) est poussée à l'intérieur du corps (3) par la pression des gaz.

9. Verrou pyrotechnique selon la revendication 8, **caractérisé en ce que** le corps (3) comprend une chambre annulaire (15) entourant la tige (2) et communiquant avec le composant pyrotechnique (5), la surface de pression étant formée par un épaulement (2a) porté par la tige (2).

## Patentansprüche

1. Pyrotechnisches Schloss (1) umfassend einen in Bezug auf einen Körper (3) verschiebbaren Schaft (2), wobei die Verlagerung des Schaftes (2) durch den Druck der durch eine pyrotechnische Zusammensetzung (5) erzeugten Gase bewirkt wird, **dadurch gekennzeichnet, dass** es wenigstens eine axiale Halterung des Schaftes (2) umfasst, welches die ständige Blockierung des Schaftes gewährleistet, die aus einer im Verlauf der Verschiebung des Schaftes (2) elastisch verformbaren Scheibe (13) gebildet wird, die in Bezug auf den Schaft feststeht und sich an einer zylindrischen Fläche des Schaftes (2) abstützt, um sich der entgegen gerichteten Verschiebung des Schaftes zu widersetzen.

2. Pyrotechnisches Schloss nach Anspruch 1, **dadurch gekennzeichnet, dass**, wenn der Schaft (2) durch den Druck der Gase verlagert worden ist, die Scheibe (13) verformt ist und eine Reibkraft auf den Schaft (2) ausübt, und so deren Festlegung in Bezug auf den Körper (3) gewährleistet.

3. Pyrotechnisches Schloss nach Anspruch 2, **dadurch gekennzeichnet, dass** die Scheibe (13) aus Federstahl von 0,2 bis 0,8 mm Dicke hergestellt ist und einen Innendurchmesser aufweist, der zwischen 85% und 97% des Durchmessers der zylindrischen Fläche des Schaftes (2) liegt, an der sie sich abstützt.

4. Pyrotechnisches Schloss nach einem der Ansprüche 1 bis 3, **dadurch gekennzeichnet, dass** die Scheibe (13) fest mit dem Körper (3) verbunden ist.

5. Pyrotechnisches Schloss nach einem der Ansprüche 1 bis 4, **dadurch gekennzeichnet, dass** der Schaft (2) eine Rille (12) umfasst, in deren Inneren sich die Scheibe (13) anordnet, wenn der Schaft (2) im Ruhezustand ist.

6. Pyrotechnisches Schloss nach einem der Ansprüche 1 bis 5, **dadurch gekennzeichnet, dass** der Schaft (2) eine Druckfläche (2a) trägt, auf welche die durch die pyrotechnische Zusammensetzung (5) erzeugten Gase einwirken.

7. Pyrotechnisches Schloss nach Anspruch 6, **dadurch gekennzeichnet, dass** der Schaft (2) durch den Druck der Gase aus dem Körper (3) nach außen gedrückt wird.

8. Pyrotechnisches Schloss nach Anspruch 6, **dadurch gekennzeichnet, dass** der Schaft (2) durch den Druck der Gase ins Innere des Körpers (3) gedrückt wird.

9. Pyrotechnisches Schloss nach Anspruch 8, **dadurch gekennzeichnet, dass** der Körper (3) eine ringförmige Kammer (15) umfasst, welche den Schaft (2) umschließt und mit der pyrotechnischen Zusammensetzung kommuniziert, wobei die Druckfläche durch eine von dem Schaft (2) getragenen Schulter (2a) gebildet wird.

## Claims

1. A pyrotechnic bolt (1) comprising a shank (2) able to translate with respect to a body (3), the displacement of the shank (2) being caused by the pressure of the gases generated by a pyrotechnic component (5), wherein it comprises at least one axial retention means for the shank (2) ensuring the constant immobilisation of the shank and constituted by a washer (13) able to deform elastically during the translation of the shank, immobile with respect to the shank and pressing on a cylindrical surface of the shank (2) to oppose its inverse translation.

2. A pyrotechnic bolt according to Claim 1, wherein, when the shank (2) has been displaced by the gas pressure, the washer (13) is deformed and exerts a frictional load on the shank (2), thereby ensuring its immobilisation with respect to the body (3).

3. A pyrotechnic bolt according to Claim 2,wherein the washer (13) is made of sprung steel of a thickness of 0.2 to 0.8 m with an inner diameter of between 85% and 97% of the diameter of the cylindrical surface of the shank (2) on which it presses.

4. A pyrotechnic bolt according to one of Claims 1 to 3, wherein the washer (13) is integral with the body (3).

5. A pyrotechnic bolt according to one of Claims 1 to 4, wherein the shank (2) incorporates a groove (12) inside which the washer (13) is positioned when the shank (2) is in its starting position.

6. A pyrotechnic bolt according to one of Claims 1 to 5, wherein the shank (2) has a pressure surface (2a) on which the gases generated by the pyrotechnic component (5) are exerted.

7. A pyrotechnic bolt according to Claim 6, wherein the shank (2) is pushed out of the body (3) by the gas pressure.

8. A pyrotechnic bolt according to Claim 6, wherein the shank (2) is pushed into the body (3) by the gas pressure.

9. A pyrotechnic bolt according to Claim 8, wherein the body (3) comprises an annular chamber (15) surrounding the shank (2) and communicating with the pyrotechnic component (5), the pressure surface being formed by a shoulder (2a) on the shank (2).
